Europäisches Patentamt

European Patent Office

Office européen des brevets

(11) Publication number: **0 412 068 A1**

# EUROPEAN PATENT APPLICATION

(21) Application number: 90830359.7

(22) Date of filing: 31.07.90

(51) Int. Cl.⁵: **B60K 17/24**, F16C 27/06, F16F 7/10

(30) Priority: **01.08.89 IT 6765889**

(43) Date of publication of application:
**06.02.91 Bulletin 91/06**

(84) Designated Contracting States:
**DE ES FR GB IT NL SE**

(71) Applicant: **IVECO FIAT S.p.A.**
**Via Puglia 35**
**I-10156 Torino(IT)**

(72) Inventor: **Randone, Claudio**
**Via Castelletto 20/3**
**I-10040 Almese (Torino)(IT)**

(74) Representative: **Buzzi, Franco et al**
**c/o Jacobacci-Casetta & Perani S.p.A. Via**
**Alfieri, 17 17**
**I-10121 Torino(IT)**

(54) **A transmission shaft for commercial vehicles with long wheel bases.**

(57) A transmission shaft (1) for commercial vehicles with long wheel bases, in which the portion which is normally constituted by three parts is replaced by a single part (2) supported for rotation on the vehicle structure (T) by means of a support (6) with a free damping mass (23) for the dynamic damping of flexural vibrations.

FIG. 1

## A TRANSMISSION SHAFT FOR COMMERCIAL VEHICLES WITH LONG WHEEL BASES

The present invention relates to transmission shafts for trucks and commercial vehicles in general with long wheel bases. Such shafts are conventionally constituted by an initial, longer portion connected to the output shaft of the gearbox and supported for rotation on the vehicle structure by shock-absorbing support means, and a shorter, telescopic end portion connected to the differential for the driving wheels of the vehicle. The initial longer portion is normally divided into three successive parts, mainly in order to raise the first critical velocity of the system to a value above the maximum operating rate of the transmission. The three successive parts are usually interconnected by coupling flanges and universal joints so as to enable the power to be transmitted correctly despite the flexure and bending which the vehicle chassis undergoes during use on the road or on broken ground. Each of the parts is supported on the vehicle chassis by means of a low-frequency-damping support which, in use, is subject both to periodic stresses (centrifugal forces due to residual imbalance in the transmission) and to non-periodic stresses (the radial component of the sliding stress of the sliding transmission formed by the telescopic end part of the shaft). Each of the supports, which are also subject to the effect of the complementary torques due to the universal joints, has resilience and structural shock-absorbing qualities, being constituted by parts made from elastomeric material. The supports thus entirely prevent the vibrations generated by the stresses mentioned above from being transmitted to the vehicle chassis but, under resonance conditions, they are unable to attenuate the effects of a small residual imbalance in the transmission shaft.

Moreover, the manufacture and assembly of the three parts of the initial portion of the shaft with their universal joints or coupling flanges involve considerable difficulties.

It would therefore be desirable to reduce the number of parts in the initial portion of the shaft: efforts made hitherto, however, in this direction have encountered the problem of the critical velocity of the system. In fact, a reduction in the number of parts involves an increase in the lengths of remaining parts to values for which the first critical velocity is less than the maximum operating velocity. This means that, when the vehicle is running normally, the shaft could start to resonate: this situation must obviously be avoided absolutely since it causes both a considerable increase in the amplitude of oscillation of the shaft and the transmission of vibrations from the shaft to the vehicle chassis which results in an abnormal increase in noise (which is noticeable even in the driving cab of the vehicle) and, in some cases, to permanent deformation or even breakage of the transmission shaft.

The object of the present invention is to provide a transmission shaft of the type defined at the beginning which is simpler and cheaper to manufacture and assemble than conventional shafts but which, at the same time, ensures operation without problems of resonance.

According to the invention, this object is achieved by means of a transmission shaft for commercial vehicles of the type defined at the beginning, characterised in that the initial longer portion is constituted by a single shaft part whose means of support on the vehicle structure include a support with a free damping mass for the dynamic damping of flexural vibrations.

By virtue of this solution, the costs of manufacturing and of assembling the shaft are considerably reduced without adversely affecting the correct operation of the shaft. In fact, even if the initial single part is of the order of 3 metres long, the use of the dynamic damper enables the oscillations of the shaft at the critical velocity to be reduced drastically, thus avoiding the risk of resonance and at the same time ensuring effective balancing of the rotating parts so as to achieve low noise and only limited transmission of vibration to the vehicle chassis in operation.

According to a preferred embodiment of the invention, the dynamic damper comprises:
- a stirrup-like casing surrounding a rolling bearing whose inner thrust ring is m<>unted on the single shaft part, the casing forming an attachment for its fixing to the vehicle structure,
- a hollow body of elastomeric material which is coupled to the casing and formed internally with two concentric rings, an outer ring and an inner ring respectively, located in axial correspondence with the bearing and connected to each other and to the body of elastomeric material by integral radial bridges,
- a hollow member for protecting the bearing, fixed to the outer thrust ring thereof and forming an outer annular seat in which the inner ring of the body of elastomeric material is inserted,
- a damping mass constituted by two metal rings interposed with radial clearance between the body of elastomeric material and the hollow protection member, coaxial therewith and on axially opposite sides of the concentric rings of the body of elastomeric material, each metal ring being inserted in a respective cover of elastomeric material connected by means of integral radial bridges to an internal annular part mounted on a respective portion of the hollow protection member.

This conformation provides optimal characteristics for reducing the amplitude of oscillation of the system at its critical velocity, together with qualities of ease of construction and reduced costs.

The invention will now be described in detail with reference to the appended drawings, provided purely by way of non-limiting example, in which:

Figure 1 is a schematic side elevation of a transmission shaft according to the invention for commercial vehicles,

Figure 2 shows the detail indicated by tle arrow II in Figure 1, on an enlarged scale,

Figure 3 is a cross-section taken on the line III-III of Figure 2,

Figure 4 is a cross-section taken on the line IV-IV of Figure 3, and

Figure 5 is an exploded perspective view of the detail shown in Figures 2 to 4.

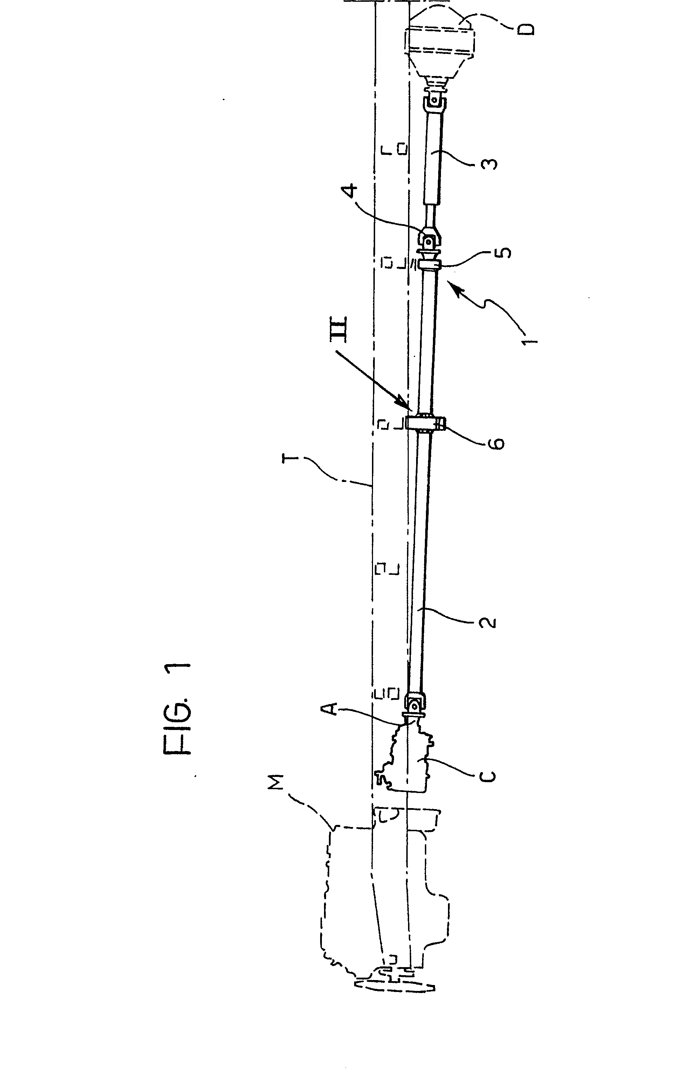

With reference initially to Figure 1, reference T indicates the chassis of a truck with a long wheel base (for example of the order of 6 metres) and an engine-gearbox unit (M-C) for driving the drive shafts of the driving wheels of the vehicle through a longitudinal transmission shaft 1 and a differential D.

The transmission shaft 1 consists of an initial portion constituted by a single part 2, which receives drive from the output shaft A of the gearbox C, and a generally conventional, telescopic end portion 3 which connects the initial part 2 to the differential D through a universal joint 4.

The function of the end portion 3, whose conformation will not be described in detail since it is conventional, is to allow the necessary axial lengthening and shortening of the shaft 1 during vertical oscillations of the differential D.

The single part 2 is supported for rotation by the chassis T of the vehicle by means of a conventional low-frequency-damping support 5 located at that end connected to the telescopic portion 3 and by means of a dynamic flexural-vibration damper 6 which is normally situated between the rear third and the centre of the shaft part 2.

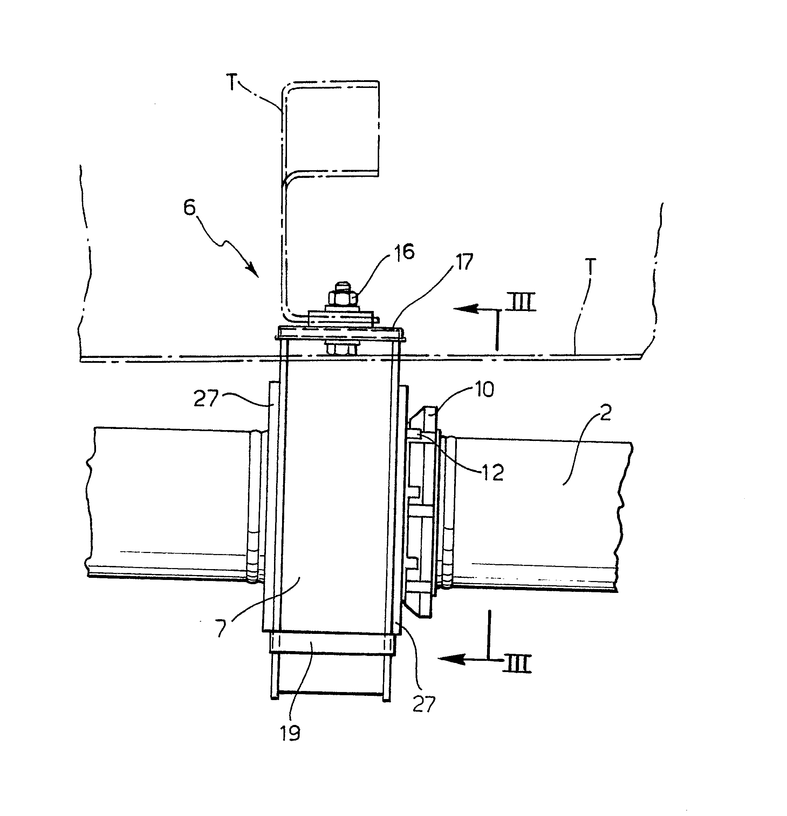

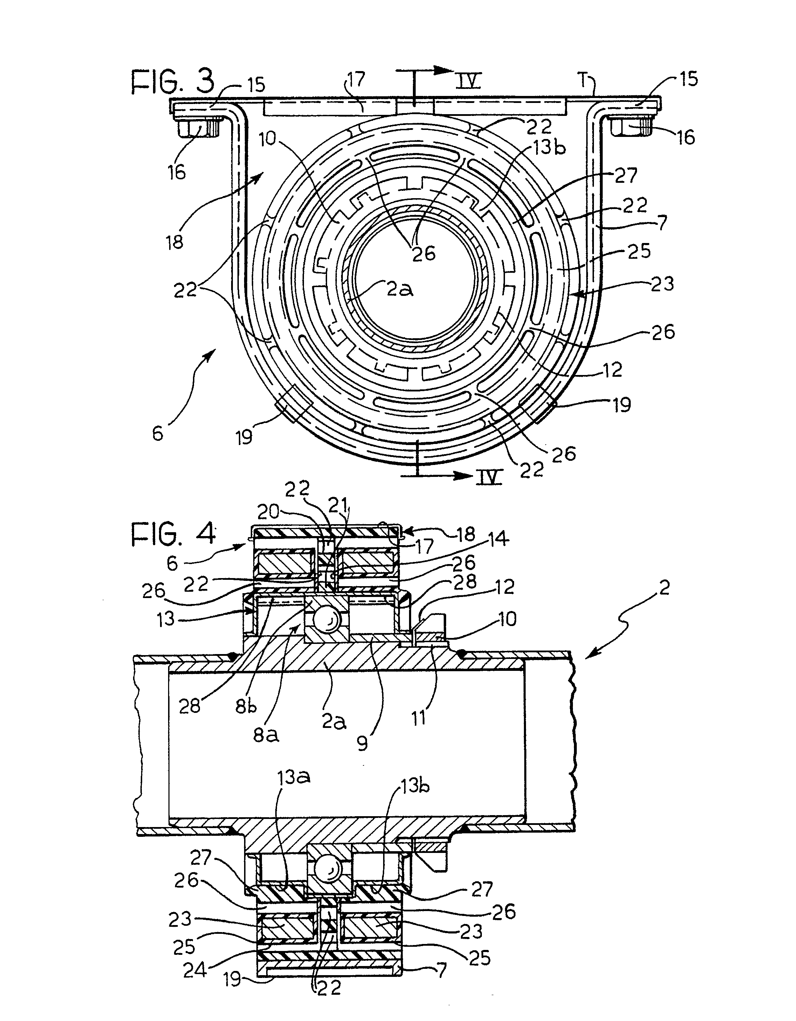

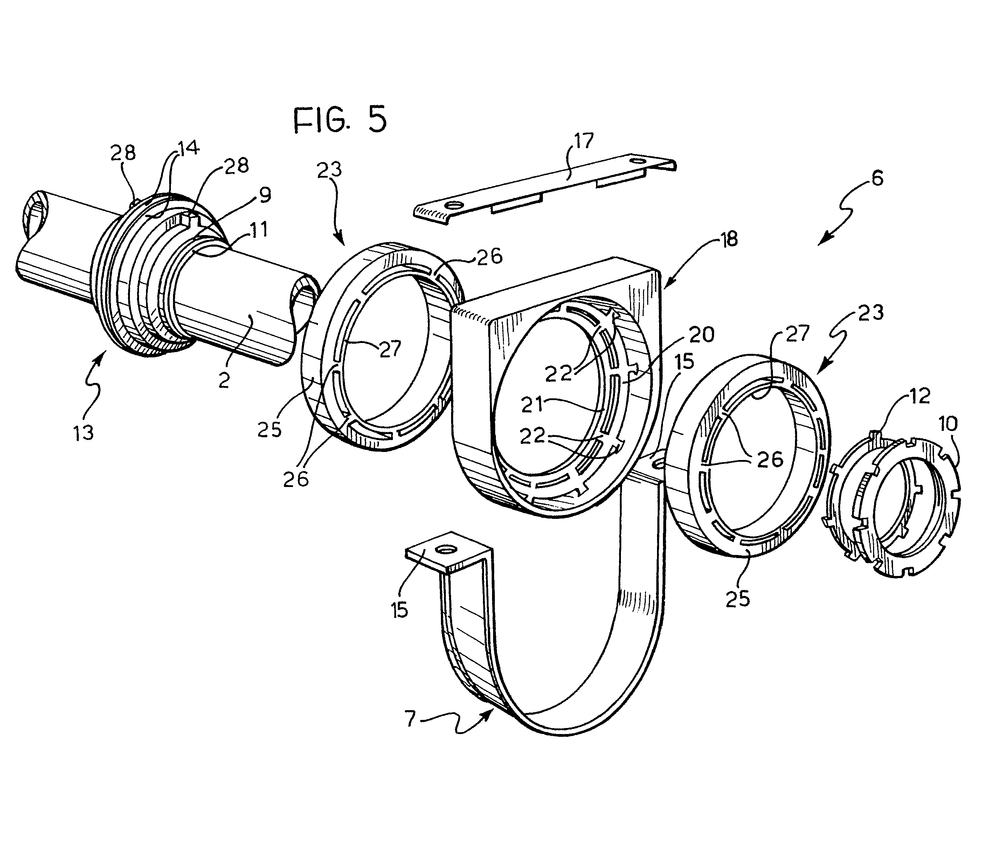

The dynamic damper 6 is of the type having a free damping mass. As shown in greater detail in Figures 2 to 6, it includes, essentially, an outer casing 7, whose profile is substantially like a stirrup and which embraces a region 2a of the shaft part 2 on which a rolling bearing 8 is mounted. The inner thrust ring of the bearing 8, indicated 8a, is fitted on to the portion 1a of the shaft part 2 and clamped axially by means of a spacer 9 and a ring nut 10 screwed on to an external thread 11 of the shaft part 2 and locked against rotation by means of a lock washer 12 with axially-deformable radial teeth.

A hollow protection member 13 is mounted on the outer thrust ring 8b of the bearing 8 to protect the bearing and has two external annular parallel projections which form an annular circumferential seat 14 which is axially aligned with the centre of the 1>earing 8 and whose function will be clarified below.

The stirrup-like casing 7 has two bent end flanges 15 for fixing the dynamic damper 6 to a cross-member of the chassis T by means of bolts 16. These same bolts 16 fix an upper protective plate 17 to the chassis T, which plate 17 bears against the upper part of a hollow body 18 of elastomeric material enclosed in the stirrup-like casing 7. The body 18 of elastomeric material is fixed to the lower part of the casing 7 by means of a pair of wrap-around metal bands 19 and is formed internally with two integral, concentric rings, an outer ring 20 and an inner ring 21 respectively, connected to each other and to the body 18 by means of integral radial bridges 22. The rings 20 and 21 are arranged in axial correspondence with the bearing 8 and the inner ring 21 is inserted in the annular seat 14 in the hollow protection member 13.

The body 18 of elastomeric material defines, with the outer surface of the hollow protection member 13, an annular space 24 in which there is inserted a free damping mass constituted by two metal rings 23. As can be seen, the rings 23, which are thus interposed with radial clearance between the body 18 of elastomeric material and the hollow protection member 13, are coaxial with the shaft part 2 and are situated on axially opposite sides of the concentric rings 20 and 21 of the body 18.

Each metal ring 23 is inserted in a respective cover 25 of elastomeric material which forms a series of integral internal radial bridges 26 joined to a circular, annular part 27 also integral with the cover 25. The annular parts 27 are mounted on respective portions 13a, 13b of the side wall of the hollow protection member 13, on opposite sides of the external circumferential seat 14. The annular parts 27 are retained by means of one or more radial projections 28 formed on the outside of the portions 13a, 13b.

In the embodiment illustrated, the shaft part 2 is of the order of 3 metres long: with this dimension, the first critical velocity of the shaft part 2 is less than the maximum operating velocity: nevertheless, the dynamic damper 6 dramatically reduces the amplitude of oscillation of the shaft part 2 at the critical velocity, preventing resonance phenomena and ensuring efficient operation without problems of noise or the risk of the deformation or even breakage of the transmission shaft 1.

**Claims**

1. A transmission shaft for commercial vehicles with long wheel bases, comprising an initial long portion connected to the output shaft of the vehicle gearbox and supported for rotation on the vehicle structure by means of shock-absorbing support means, and a short, telescopic end part connected to the differential of the driving wheels of the vehicle, characterised in that the initial long portion of the transmission shaft (1) is constituted by a single shaft part (2) whose means of support on the vehicle structure (T) include a support (6) with a free damping mass (23) for the dynamic damping of flexural vibrations.

2. A transmission shaft according to Claim 1, characterised in that the dynamic damper (6) comprises:
- a stirrup-like casing (7) surrounding a rolling bearing (8) whose inner thrust ring (8a) is mounted on the said shaft part (2), the casing (7) forming an attachment (15) for its fixing to the vehicle structure (T),
- a hollow body (18) of elastomeric material which is coupled to the casing (7) and formed internally with two concentric rings, an outer ring (20) and an inner ring (21) respectively, located in axial correspondence with the bearing (8) and connected to each other and to the body (18) of elastomeric material by integral radial bridges (22),
- a hollow member (13) for protecting the bearing (8) fixed to the outer thrust ring (8b) thereof and forming an outer annular seat (14) in which the inner ring (21) of the body (18) of elastomeric material is inserted,
- a damping mass constituted by two metal rings (23) interposed with radial clearance (24) between the body (18) of elastomeric material and the hollow protection member (13), coaxial therewith and on axially opposite sides of the concentric rings (20, 21) of the body (18) of elastomeric material, each metal ring (23) being inserted in a respective cover (25) of elastomeric material connected by integral, radial bridges (26) to an internal annular part (27) mounted on a respective portion (13a, 13b) of the hollow protection member (13).

FIG. 1

EP 0 412 068 A1

FIG. 3

FIG. 4

# FIG. 5

EP 0 412 068 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1295476 (RENAULT)<br>* page 1, column 2, line 33 - page 2, column 2, line 26; figures 1-5 *<br>--- | 1 | B60K17/24<br>F16C27/06<br>F16F7/10 |
| P,A | US-A-4865470 (P.J.MAZZIOTTI)<br>* column 2, lines 1 - 15; figures 1-3 *<br>--- | 2 | |
| A | US-A-4392694 (J.T.REYNOLDS)<br>* column 2, lines 5 - 27; figures 1-5 *<br>--- | 2 | |
| A | DE-A-3632418 (BMW)<br>--- | 1 | |
| A | WO-A-8805503 (GELENKWELLENBAU GMBH)<br>* abstract; figures 1-5 *<br>--- | | |
| A | US-A-4576356 (R.J.KUCERA)<br>--- | | |
| A | GB-A-2100832 (PORSCHE AG)<br>----- | | |

|  |  |
|---|---|
| | TECHNICAL FIELDS SEARCHED (Int. Cl.5 ) |
| | F16F<br>B60K<br>F16C |

The present search report has been drawn up for all claims

| Place of search | Date of completion of the search | Examiner |
|---|---|---|
| THE HAGUE | 08 OCTOBER 1990 | PEMBERTON P. |

EPO FORM 1503 03.82 (P0401)